# EUROPÄISCHE PATENTSCHRIFT

(11) **EP 0 668 216 B1**
(45) Veröffentlichungstag und Bekanntmachung des Hinweises auf die Patenterteilung: **27.11.1996**
(21) Anmeldenummer: 95101881.1
(22) Anmeldetag: 11.02.1995
(51) Int. Cl.: B65D 35/12, C08L 29/04, C08L 23/06, C08L 23/08

(54) **Verfahren zum Herstellen einer Kunststofftube und nach dem Verfahren hergestellte Kunststofftube**
Method for the production of a plastic tube and tube thus obtained
Procédé de fabrication d'un tube en matière plastique et tube obtenu selon ce procédé

(30) Priorität: 17.02.1994 DE 4404970
(43) Veröffentlichungstag der Anmeldung: 23.08.1995
(73) Patentinhaber: Tubex GmbH Tuben- und Metallwarenfabrik, D-72414 Rangendingen (DE)
(72) Erfinder: Brösch, Hans, Dipl.-Ing. (FH), D-72116 Mössingen (DE)
(74) Vertreter: Charrier, Rolf, Dipl.-Ing.

(56) Entgegenhaltungen:
- EP-A- 0 473 176
- CH-A- 682 480

## Beschreibung

Die Erfindung betrifft ein Verfahren zum Herstellen einer Kunststofftube nach dem Oberbegriff des Anspruches 1 und eine nach dem Verfahren hergestellte Kunststofftube.

Kunststofftuben, bei denen ein Hindurchdiffundieren des Tubeninhalts oder von Teilen davon durch den Tubenmantel verhindert ist, weisen einen Tubenmantel auf, der aus einer äußeren Schicht aus Polyäthylen, einer inneren Schicht ebenfalls aus Polyäthylen und einer Sperrschicht besteht. Diese Sperrschicht kann aus einer Aluminiumfolie oder aus Äthylenvinylalkohol bestehen. Da Äthylenvinylalkohol mit Polyäthylen keine mechanisch feste Verbindung eingeht, ist es erforderlich, zwischen der Äthylenvinylalkoholschicht und den Polyäthylenschichten Haftvermittlerschichten vorzusehen. Mit einem so hergestellten Tubenmantel wird die Tubenschulter verbunden. Diese Tubenschulter besteht ebenfalls aus Polyäthylen und wird entweder als separates Teil hergestellt und sodann mit dem Tubenmantel verschweißt oder spritztechnisch an den Tubenmantel angeformt.

Nachteilig ist hierbei, daß diese Tubenschultern keine Sperrschichten aufweisen, so daß durch sie ein Hindurchdiffundieren des Tubeninhalts stattfindet.

Nach der CH-A-682480 weist die Tubenschulter an der Innenseite eine Sperrschicht aus Äthylenvinylalkohol in Folienform auf. Eine solche Schulter wird als separates Teil hergestellt und anschließend mit dem Tubenmantel durch An- oder Aufschmelzen verbunden. Eine solche Sperrschicht ist jedoch kompliziert herstellbar und mit dem Material der Schulter schwer verbindbar.

Die EP-A-0 473 176 beschreibt eine Tubenschulter, die aus 0 bis 50 Gew.-% Polyäthylen, 10 bis 50 Gew.-% Äthylenvinylalkohol und 10 bis 90 Gew.-% mit Carboxylsäure modifiziertem Polyäthylen besteht. Es wird angegeben, daß eine Mischung aus Polyäthylen und Äthylenvinylalkohol eine schlechte Mischbarkeit und schlechte Sperreigenschaften aufweist, so daß das modifizierte Polyäthylen als Klebeeigenschaften aufweisender Haftvermittler für erforderlich angesehen wird.

Es besteht die Aufgabe ein Verfahren zu schaffen, das eine Tube ergibt, bei der auch die Tubenschulter eine Diffusionssperre aufweist, die jedoch kostengünstig hergestellt werden kann.

Gelöst wird diese Aufgabe mit den kennzeichnenden Merkmalen des Anspruches 1. Vorteilhafte Ausgestaltungen des Verfahrens und eine nach dem Verfahren hergestellte Kunststofftube sind Gegenstand der weiteren Ansprüche.

Verwendet wird bevorzugt ein Tubenmantel mit einer Sperrschicht aus Äthylenvinylalkohol, einer äußeren und einer inneren Schicht jeweils aus Polyäthylen und Haftvermittlerschichten zwischen der Sperrschicht und den Polyäthylenschichten. Anstelle von Äthylenvinylalkohol als Sperrschicht können auch andere, Sperreigenschaften aufweisende Polyvinylalkohole verwendet werden. Das Verfahren ist in gleicher Weise anwendbar bei einem Tubenmantel, bei dem die Sperrschicht aus Aluminium besteht.

Zur Herstellung der Tubenschulter werden bevorzugt 10 Gew.-%, insbesondere 0,5 bis 1,0 Gew.-% Äthylenvinylalkohol mit 99,5 bis 99 Gew.-% Polyäthylen vermischt und unter Druck und Wärmezufuhr in einem Schneckenextruder plastifiziert. Die Temperatur wird hierbei auf einen Wert gehalten, bei dem die Materialien in den plastischen Zustand übergehen. Unter Verwendung der vorgenannten Materialien beträgt die obere Temperaturgrenze 240°C und liegt bevorzugt im Bereich zwischen 225° und 230°C. Würde das Material spritztechnisch verarbeitet werden, müßte dies dann eine Temperatur von 260°C und höher aufweisen. Am Ende des Plastifiziervorgangs hat sich der Äthylenvinylalkohol lamellen- bzw. schlierenförmig im Polyäthylen verteilt, was auf die unterschiedliche Dichte der beiden Materialien zurückzuführen ist.

Von der plastifizierten Mischung aus Äthylenvinylalkohol und Polyäthylen wird nunmehr eine solche Menge in ein Werkzeug eingebracht, wie zur Herstellung einer Tubenschulter erforderlich ist. Im Werkzeug befindet sich der obere nach innen bogenförmig verlaufende Rand des Tubenmantels. Das Werkzeug weist eine Form entsprechend der Innen- und Außenform der herzustellenden Schulter auf. Die eingebrachte plastifizierte Mischung wird nunmehr im vorgenannten Temperaturbereich durch Pressen zu einer Schulter umgeformt, wobei die Berührungsbereiche zwischen Tubenmantel und Tubenschulter miteinander verschweißen. Bei den üblichen Tubengrößen wird hierbei auf das Werkzeug eine Kraft von 200 bis 300 kp, entsprechend 2.000 bis 3.000 N ausgeübt.

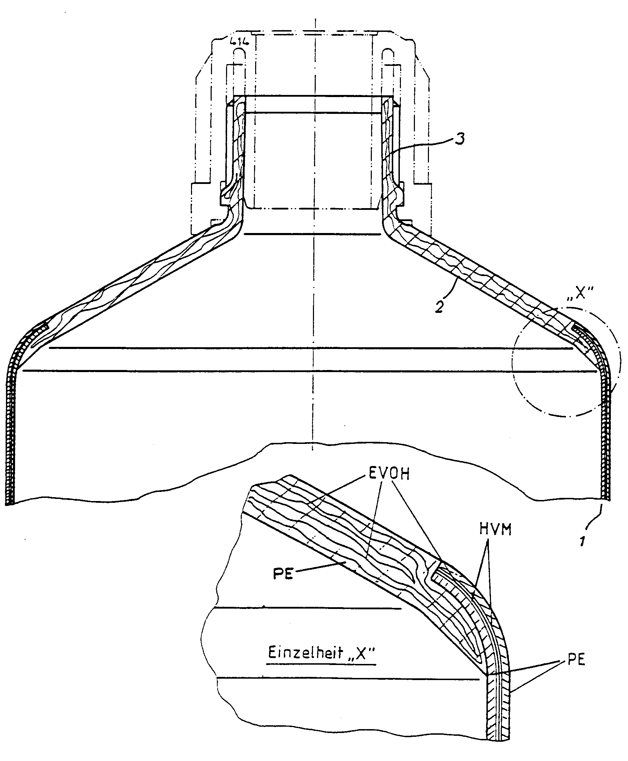

Die sich ergebende Tube ist im Schnitt durch den Schulterbereich auf der Zeichnung dargestellt. Sie zeigt, daß der Tubenmantel 1 aufeinanderfolgend aus einer Polyäthylenschicht PE, einer Haftvermittlerschicht HVM, einer Schicht aus Äthylenvinylalkohol EVOH, einer weiteren Haftvermittlerschicht HVM und einer weiteren Polyäthylenschicht PE besteht. Der obere Bereich des Tubenmantels ist eingezogen und im Berührungsbereich mit der Tubenschulter 2 mit dieser verschweißt. Die Tubenschulter 2 weist einen Hals 3 mit einem Gewinde oder einer anderen Form zur lösbaren Verbindung mit einer Verschlußvorrichtung oder mit einem Applikator auf. Die Tubenschulter 2 besteht aus Polyäthylen, in welches lamellen- oder schlierenförmig Äthylenvinylalkohol EVOH eingelagert ist.

Es hat sich gezeigt, daß bei Anteilen an Äthylenvinylchlorid von über 20 % der Tubenhals eine nachlassende mechanische Stabilität aufweist und an den Grenzbereichen zwischen Polyäthylen und Äthylenvinylalkohol anfängt sich aufzulösen. Die gleiche Erscheinung tritt auf, wenn die Mischung bei höheren Temperaturen als 240° plastifiziert wird. Dies gilt insbesondere bei Temperaturen, bei denen das Material spritztechnisch verarbeitet werden kann.

## Patentansprüche

1. Verfahren zur Herstellung einer Kunststofftube mit einem eine Sperrschicht aufweisenden Tubenmantel aus Polyäthylen, der mit einer Tubenschulter verbunden wird, welche aus Polyäthylen und Äthylenvinylalkohol besteht, **dadurch gekennzeichnet**, daß Polyäthylen mit maximal 20 Gew.-% Äthylenvinylalkohol zur Bildung einer plastischen, teigigen Mischung unter Druck und bei einer Temperatur von maximal 240°C verknetet wird, bis der Äthylenvinylalkohol sich im Polyäthylen lamellen- bzw. schlierenförmig verteilt hat und aus dieser Mischung die Tubenschulter unter Verformungsdruck geformt und mit dem Tubenmantel verbunden wird.

2. Verfahren nach Anspruch 1, **dadurch gekennzeichnet**, daß das Kneten in einer Extruderschnecke erfolgt.

3. Verfahren nach Anspruch 1 oder 2, **dadurch gekennzeichnet**, daß die Tubenschulter direkt an den Mantel angeformt wird und im Berührungsbereich mit ihm verschweißt ist.

4. Verfahren nach einem der Ansprüche 1 bis 3, **dadurch gekennzeichnet**, daß dem Polyäthylen 10 Gew.-%, vorzugsweise 0,5 bis 1,0 Gew.-% Äthylenvinylalkohol zugesetzt werden.

5. Verfahren nach einem der Ansprüche 1 bis 4, **dadurch gekennzeichnet**, daß während des Knetens und Verformens die Mischung auf einer Temperatur von 225° bis 230°C gehalten wird.

6. Verfahren nach einem der Ansprüche 1 bis 5, **dadurch gekennzeichnet**, daß auf das Verformungswerkzeug bei normal großen Tuben eine Kraft von 2.000 bis 3.000 N ausgeübt wird.

7. Kunststofftube mit einem eine Sperrschicht aufweisenden Tubenmantel aus Polyäthylen, der mit einer Tubenschulter verbunden ist, welche aus Polyäthylen und Äthylenvinylalkohol besteht, **gekennzeichnet durch** eine Tubenschulter, in welchem Äthylenvinylalkohol mit einem Anteil von maximal 20 Gew.-% lamellen-bzw. schlierenförmig verteilt ist.

8. Kunststofftube nach Anspruch 7, **dadurch gekennzeichnet**, daß die Tubenschulter direkt am Tubenmantel angeformt und im Berührungsbereich mit dem Mantel mit diesem verschweißt ist.

9. Kunststofftube nach Anspruch 7 oder 8, **dadurch gekennzeichnet**, daß die Tubenschulter 10 Gew.-%, vorzugsweise 0,5 bis 1,0 Gew.-% Äthylenvinylalkohol enthält.

## Claims

1. A method of production of a plastics tube having a tube jacket of polyethylene which exhibits a blocking layer and is connected to a tube shoulder which consists of polyethylene and ethylenevinyl alcohol,
**characterized in that**
polyethylene with a maximum of 20 % by wt. of ethylenevinyl alcohol is kneaded thoroughly under pressure and at a maximum temperature of 240 °C to form a plastic doughy mixture until the ethylenevinyl alcohol has distributed itself in the polyethylene in the form of blades or streaks and the tube shoulder is moulded from this mixture with deformation pressure and connected to the tube jacket.

2. A method as in Claim 1, **characterized in that**
the kneading is effected in a barrel extruder.

3. A method as in Claim 1 or 2, **characterized in that**
tbe shoulder is moulded directly onto the jacket and welded to it in the region of contact.

4. A method as in one of the Claims 1 to 3, **characterized in that**
10% by wt., preferably 0.5 to 1.0% by wt. of ethylenevinyl alcohol is added to the polyethylene.

5. A method as in one of the Claims 1 to 4, **characterized in that**
during the kneading and deformation the mixture is kept at a temperature of 225° to 230°.

6. A method as in one of the Claims 1 to 5, **characterized in that**
in the case of tubes of standard size a force of 2000 to 3000 N is exerted upon the deformation tool.

7. A plastics tube having a tube jacket of polyethylene which exhibits a blocking layer and is connected to a tube shoulder which consists of polyethylene and ethylenevinyl alcohol, characterized by a tube shoulder in which ethylenevinyl alcohol is distributed in the form of blades or streaks to a maximum proportion of 20% by wt.

8. A plastics tube as in Claim 7, **characterized in that** tbe tube shoulder is moulded directly onto the tube jacket and in the region of contact with the jacket is welded to it.

9. A plastics tube as in Claim 7 or 8, **characterized in that** tbe tube shoulder contains 10%. by wt., preferably 0.5 to 1.0% by wt. of ethylenevinyl alcohol.

## Revendications

1. Procédé de fabrication d'un tube plastique, avec un cylindre de tube en polyéthylène comportant une couche d'arrêt, cylindre de tube qui est relié à un épaulement de tube, lequel est constitué de polyéthylène et d'éthylènealcool vinylique, caractérisé en ce qu'on malaxe du polyéthylène, avec au maximum 20 % en poids d'éthylènealcool vinylique, pour former un mélange pâteux plastique, sous pression et à une température maximale de 240°C, jusqu'à ce que l'éthylène-alcool vinylique se soit réparti dans le polyéthylène sous forme de lamelles ou de stries, et que l'épaulement du tube soit façonné à partir de ce mélange, sous une pression de formage, et soit assemblé au cylindre du tube.

2. Procédé selon la revendication 1, caractérisé en ce que le malaxage s'effectue dans une vis d'extrudeuse.

3. Procédé selon la revendication 1 ou 2, caractérisé en, ce que l'épaulement du tube est directement rapporté au cylindre et est soudé à ce dernier dans la zone de contact.

4. Procédé selon l'une des revendications 1 à 3, caractérisé en ce qu'on ajoute au polyéthylène 10 % en poids et de préférence de 0,5 à 1,0 % en poids d'éthylènealcool vinylique.

5. Procédé selon l'une des revendications 1 à 4, caractérisé en ce que, pendant le malaxage et le formage, le mélange est maintenu à une température de 225 à 230°C.

6. Procédé selon l'une des revendications 1 à 5, caractérisé en ce qu'on exerce une force de 2000 à 3000 N sur l'outil de formage, dans le cas de tubes de taille normale.

7. Tube plastique, comportant une chemise de tube en polyéthylène, présentant une couche d'arrêt, cylindre relié à un épaulement de tube, lequel est constitué de polyéthylène et d'éthylène-alcool vinylique, caractérisé par un épaulement de tube dans lequel l'éthylène-alcool vinylique est réparti en une quantité maximale de 20 % en poids en forme de lamelles ou de stries.

8. Tube plastique selon la revendication 7, caractérisé en ce que l'épaulement du tube est directement rapporté au cylindre du tube, et est soudé à ce dernier dans la zone de contact avec le cylindre.

9. Tube plastique selon la revendication 7 ou 8, caractérisé en ce que l'épaulement du tube contient 10 % en poids et de préférence de 0,5 à 1,0 % en poids d'éthylène/alcool vinylique.
